# EUROPÄISCHE PATENTSCHRIFT

(11) **EP 4 126 616 B1**
(45) Veröffentlichungstag und Bekanntmachung des Hinweises auf die Patenterteilung: **11.12.2024**
(21) Anmeldenummer: 21704491.6
(22) Anmeldetag: 09.02.2021
(51) Int. Cl.: B60W 30/045, B60T 8/1755, B60T 8/32, B60T 8/48, B60T 8/17

(54) **VERFAHREN SOWIE KRAFTFAHRZEUG**
METHOD AND MOTOR VEHICLE
PROCÉDÉ ET VÉHICULE AUTOMOBILE

(30) Priorität: 02.04.2020 DE 102020109232
(43) Veröffentlichungstag der Anmeldung: 08.02.2023
(73) Patentinhaber: Bayerische Motoren Werke Aktiengesellschaft, 80809 München (DE)
(72) Erfinder: HUELSMANN, Florian, 80639 München (DE); LORCH, Andreas, 80992 München (DE)
(86) Internationale Anmeldenummer: PCT/EP2021/053008
(87) Internationale Veröffentlichungsnummer: WO 2021/197694

(56) Entgegenhaltungen:
- DE-A1- 102008 011 575
- DE-A1- 102012 222 884
- DE-A1- 102016 200 500
- US-A1- 2016 009 275

## Beschreibung

Die Erfindung betrifft ein Verfahren zum Verzögern eines einspurigen Kraftfahrzeugs sowie ein Kraftfahrzeug.

Die gattungsgemäße DE 10 2012 222884 A1 beschreibt ein Verfahren, das mittels einer Sensorik im Zweirad ein drohender oder bereits eingetretener kritischer Fahrzustand detektiert. Auf der Grundlage sensorischer Daten wird der Schwimmwinkel oder eine mit dem Schwimmwinkel korrelierende Fahrzustandsgröße ermittelt und mit einem zugeordneten Grenzwert verglichen. Überschreitet der Schwimmwinkel bzw. die hiermit korrelierende Fahrzustandsgröße den Grenzwert, wird als Gegenmaßnahme das Moment an mindestens einem Fahrzeugrad selbsttätig modifiziert.

Die DE 10 2008 011 575 A1, die US 2016/009275 A1 und die DE 10 2016 200 500 A1 diskutieren weitere Verfahren zum Stabilisieren eines Zweirads.

Üblicherweise dient das Verzögern eines Kraftfahrzeugs zur kontrollierten Geschwindigkeitsreduzierung des Kraftfahrzeugs, beispielsweise um eine Kurve mit adäquater Geschwindigkeit anzufahren.

Vor allem mit einspurigen Kraftfahrzeugen werden Kurven in der Regel sportlich angefahren. Um hierbei ein besseres Einlenk- und Bremsverhalten zur erreichen, ist es möglich, das Kraftfahrzeug mit einem sogenannten "Slide" abzubremsen. Ein derartiger Slide stellt ein kontrolliertes, beabsichtigtes Überbremsen des Hinterrads dar, wobei ein hoher Schlupf am Hinterrad entsteht und dessen Seitenführungskraft reduziert wird. Je höher der Schlupf ist, desto geringer ist die Seitenführungskraft und desto höher ist der Schräglaufwinkel (Slide).

Vor allem kann durch den Slide, beispielsweise beim Anbremsen einer Kurve, eine stärkere Verzögerung des Kraftfahrzeugs erreicht werden als bei einem normalen Anbremsvorgang. Dadurch kann die Kurve erst später angebremst und so die Kurve schneller durchfahren werden.

Ein derartig kontrollierter, stabiler Slide ist allerdings schwer zu erreichen.

Die Aufgabe der Erfindung ist es, ein Verfahren und ein Kraftfahrzeug bereitzustellen, bei dem ein kontrollierter Slide leicht erzielt werden kann.

Diese Aufgabe wird erfindungsgemäß durch ein Verfahren zum Verzögern eines einspurigen Kraftfahrzeugs, insbesondere eines Motorrads, mit den in Anspruch 1 angegebenen Schritten gelöst.

Der Kern der Erfindung ist demnach die kombinierte Ansteuerung einer Bremsanlage und zusätzlich eines Motors des einspurigen Kraftfahrzeugs zur gemeinsamen Erzeugung eines Gesamtmoments am einem Hinterrad des einspurigen Kraftfahrzeugs. Durch die Bremsanlage können hohe Bremsmomente am Rad erzeugt werden, allerdings bei geringer Genauigkeit und Regelgeschwindigkeit. Der Motor bietet eine hohe Genauigkeit und Regelgeschwindigkeit, allerdings bei eingeschränktem Momentbereich. Durch die kombinierte Ansteuerung dieser beiden Aktoren kann ein breiter Momentbereich mit hoher Genauigkeit und Regelgeschwindigkeit abgedeckt werden.

Hierbei kann vorgesehen sein, dass die Teilmomente und demnach auch das Gesamtmoment - in Bezug auf eine Vorwärtslaufrichtung der Räder des einspurigen Kraftfahrzeugs - Bremsmomente sind, d.h. das Initialmoment des Rads durch die von der Steuereinheit angesteuerte Bremsanlage und vom angesteuerten Motor auf das Gesamtmoment verringert wird.

Alternativ kann das Motorteilmoment - in Bezug auf eine Vorwärtslaufrichtung der Räder des einspurigen Kraftfahrzeugs - ein Beschleunigungsmoment sein, d.h. das Initialmoment des Rads wird durch den von der Steuereinheit angesteuerten Motor auf das Gesamtmoment angehoben. Demnach ist der Wert des Motorteilmoments nach der Ansteuerung des Motors höher als vor der Ansteuerung.

Insbesondere wird das Motorteilmoment durch eine Motorschleppmomentregelung geregelt. Eine wirkungstechnische Kopplung des Motors und des Hinterrads ist bei einspurigen Kraftfahrzeugen immer vorhanden. Demnach muss kein weiterer Mechanismus vorgesehen werden, um das Motorteilmoment am Hinterrad anzulegen. Demnach kann das Motorteilmoment ohne weiteren Bedarf an zusätzlichen Bauteilen und Steuerungseinheiten leicht durch die Motorschleppmomentregelung geregelt werden.

Erfindungsgemäß ist das Fahrmanöver ein kontrolliertes Überbremsen des Hinterrads beim Anbremsen einer Kurve, wodurch hoher Schlupf am Hinterrad entsteht. Dabei wird die Seitenführungskraft des Hinterrads reduziert und der Schräglaufwinkel des Hinterrads vergrößert. Dadurch kann eine stärkere Verzögerung des Kraftfahrzeugs erreicht werden als bei einem normalen Anbremsvorgang.

Der Schräglaufwinkel des Hinterrads stellt hierbei einen "Slide" des Hinterrads dar.

Das Bremsenteilmoment und das Motorteilmoment können in Summe das benötigte Gesamtmoment ergeben. Auf diese Weise können die Vorteile der Bremsanlage (Erzeugung hoher Bremsmomente) und des Motors (hohe Genauigkeit und Regelgeschwindigkeit) vereint werden, um exakt das benötigte Gesamtmoment am Rad aufzubringen.

Insbesondere erkennt die Steuereinheit vor oder während dem gewünschten Fahrmanöver, dass der Fahrer das gewünschte Fahrmanöver ausführen will. Die Erkennung kann dabei einerseits automatisch erfolgen oder andererseits manuell induziert werden.

Die automatische Erkennung kann anhand von verschiedenen Fahrzeugparametern erfolgen, wie beispielsweise eines aktuellen Bremsdrucks an der Hinterradbremse und/oder der Vorderradbremse, eines aktuellen inertialen Zustands des Kraftfahrzeugs, insbesondere einer aktuellen Schräglage und eines aktuellen Schwimmwinkels, der aktuellen Verzögerung und einer aktuellen Geschwindigkeit des Kraftfahrzeugs.

Bei der manuellen Indizierung kann der Steuereinheit zeitlich vor oder während dem gewünschten Fahrmanöver durch manuelles Betätigen eines Auslösers durch den Fahrer mitgeteilt werden, dass das gewünschte Fahrmanöver beim nächsten Verzögern des Kraftfahrzeugs bzw. jetzt - wenn das Kraftfahrzeug gerade verzögert wird - durchgeführt werden soll.

Der Auslöser kann beispielsweise eine durch den Fahrer manuelle Eingabe an einer der Eingabegeräte sein.

Zusätzlich oder alternativ kann ein kurzes manuelles Betätigen der Hinterradbremse durch den Fahrer als Auslöser dienen.

Eine Ausführungsform sieht vor, dass die Bremsanlage eine Bremsensteuerung aufweist, die einen Teil der Steuereinheit darstellt, insbesondere wobei die Bremsanlage ein Antiblockiersystem (ABS) umfasst, und/oder dass das Kraftfahrzeug eine Motorsteuerung aufweist, die einen Teil der Steuereinheit darstellt. Da bei modernen Kraftfahrzeugen in der Regel eine Bremsensteuerung und ABS sowie eine Motorsteuerung vorhanden sind, kann das Verfahren sehr leicht integriert werden.

Die Bremsensteuerung kann die Steuerung des ABS darstellen. Demnach muss keine zusätzliche Steuerung für das ABS vorgesehen werden, was Bauraum, Herstellungsaufwand und Kosten spart.

Dabei können die Bremsensteuerung und die Motorsteuerung signaltechnisch miteinander gekoppelt sein, sodass Informationen oder erfasste Daten einer Sensorik zwischen der Bremsensteuerung und der Motorsteuerung, insbesondere bidirektional ausgetauscht werden können. Auf diese Weise können die Bremsanlage und der Motor abhängig voneinander angesteuert werden.

Insbesondere wird der Motor abhängig vom von der Bremsanlage erzeugten Bremsenteilmoment angesteuert, sodass das vom Motor erzeugte Motorteilmoment abhängig vom Bremsenteilmoment ist.

Es kann vorgesehen sein, dass zum Erzeugen des Bremsenteilmoments am Hinterrad die folgenden weiteren Schritte durchgeführt werden:
- Ermitteln eines Soll-Bremsdrucks der Bremsanlage in Abhängigkeit des ermittelten Bremsenteilmoments durch die Steuereinheit, insbesondere die Bremsensteuerung, und
- Erzeugen des Bremsenteilmoments durch Betätigen der Bremse der Bremsanlage durch die Steuereinheit mit dem ermittelten Soll-Bremsdruck.

Auf diese Weise kann die Bremsanlage vollautomatisch mit dem notwendigen Soll-Bremsdruck zum Erreichen eines kontrollierten Slides von der Steuereinheit, insbesondere von der Bremsensteuerung angesteuert werden. So wird das Einleiten des kontrollierten Slides deutlich vereinfacht, da der Soll-Bremsdruck erzeugt wird, ohne dass der Fahrer des Kraftfahrzeugs die Hinterradbremse selbst betätigen muss.

Alternativ kann die Bremsanlage, insbesondere die Hinterradbremse durch den Fahrer betätigt werden, wobei die Bremsensteuerung eine Bremsdruckbegrenzung der Hinterradbremse darstellt, durch die der vom Fahrer aufgebrachte Bremsdruck auf den Soll-Bremsdruck eingestellt, insbesondere verringert wird. In anderen Worten kann der vom Fahrer aufgebrachte Bremsdruck durch Ansteuerung der Bremsanlage durch die Steuereinheit, insbesondere die Bremsensteuerung auf den Soll-Bremsdruck reduziert werden. Die Steuereinheit, insbesondere die Bremsensteuerung begrenzt somit, unter Einbezug verschiedener Parameter, einen vom Fahrer des Kraftfahrzeugs aufgebrachten Bremsdruck auf den Soll-Bremsdruck, der notwendig ist, um den kontrollierten Slide des Rads einzuleiten. Diese Teilfunktion nimmt dem Fahrer die richtige Dosierung der Hinterradbremse ab, da er diese nur noch stark betätigen muss, während die Bremsensteuerung den tatsächlich notwendigen Soll-Bremsdruck einstellt. Dadurch wird ein zu starkes Überbremsen verhindert und das Einleiten des kontrollierten Slides deutlich vereinfacht.

Zur Erzeugen des Motorteilmoments können die folgenden weiteren Schritte durchgeführt werden:
- Ermitteln eines Soll-Drehmoments des Motors auf Grundlage des ermittelten Motorteilmoments, und
- Erzeugen des Motorteilmoments durch Regeln des Motors auf das Soll-Drehmoment durch die Steuereinheit, insbesondere die Motorsteuerung.

Dadurch kann das notwendige Motorteilmoment zur Erzeugung eines kontrollierten Slides des Hinterrads sehr genau und schnell eingestellt werden.

Insbesondere wird dabei das Drehmoment des Motors auf das Soll-Drehmoment angehoben. Bei einem Anheben des Motordrehmoments steht ein größerer Drehmomentbereich zur Verfügung als bei einem Absenken des Motordrehmoments. Dementsprechend ist von Vorteil, wenn das Bremsenteilmoment etwas unter dem gewünschten Gesamtmoment liegt und durch das Motorteilmoment das durch das Bremsenteilmoment resultierende aktuelle Drehmoment am Hinterrad sehr genau auf das gewünschte Gesamtmoment angehoben wird.

Im Gesamten wird also über die Bremsanlage, insbesondere mittels der Bremsensteuerung, grob das Bremsenteilmoment erzeugt, dass das Überbremsen des Hinterrads gewährleistet. Durch den Motor, insbesondere mittels der Motorsteuerung, wird das aktuelle Drehmoment am Rad feinjustiert, beispielsweise durch Anheben des Motordrehmoments auf das Soll-Drehmoment, sodass ein kontrollierter, für den aktuellen Zustand des Kraftfahrzeugs passender Slide eingeleitet wird.

Beispielsweise erfolgt das Regeln des Motors auf das ermittelte Soll-Drehmoment durch Ansteuern des gesamten Motors, einzelner Zylinder und/oder einzelner Zylinderbänke des Motors. Auf diese Weise kann eine auf den aktuellen Zustand des Kraftfahrzeugs angepasste und demnach eine effiziente Regelung des Motors auf das ermittelte Soll-Drehmoment gewährleistet werden.

Ein Aspekt sieht vor, dass das Gesamtmoment, das Bremsenteilmoment, insbesondere der Soll-Bremsdruck, und/oder das Motorteilmoment, insbesondere das Soll-Drehmoment, auf Grundlage eines aktuellen Lenkwinkels, einer aktuellen Raddrehzahl eines Vorderrads, einer aktuellen Raddrehzahl des Hinterrads, einer aktuellen Fahrzeuggeschwindigkeit, eines aktuellen Schlupfs des Vorderrads, eines aktuellen Schlupfs des Hinterrads, eines aktuellen inertialen Zustands, insbesondere einer aktuellen Schräglage und/oder eines aktuellen Schwimmwinkels des Kraftfahrzeugs, eines gewählten Fahrmodus und/oder eines vom Fahrer aufgebrachten Bremsdrucks, insbesondere am Vorderrad, ermittelt wird. So kann das für den aktuellen Zustand des Kraftfahrzeugs passende Gesamtmoment ermittelt werden, das zur Einleitung eines stabilen, kontrollierten Slides des Hinterrads notwendig ist.

Der inertiale Zustand kann eine Schräglage, einen Schwimmwinkel und/oder Ähnliches umfassen.

Insbesondere ist vorgesehen, dass das Bremsenteilmoment, insbesondere der Soll-Bremsdruck, aus der aktuellen Verzögerung und/oder der aktuellen Fahrzeuggeschwindigkeit des Kraftfahrzeugs ermittelt wird. Die Verzögerung wird einerseits aufgrund des, beispielsweise durch eine Inertialsensorik gemessenen, inertialen Zustands und anderseits aus dem am Vorderrad aufgebrachten Bremsdruck ermittelt. Auf diese Weise kann ein kontrolliertes Überbremsen des Hinterrads erzielt werden, ohne dabei die stabile Lage des Kraftfahrzeugs zu gefährden. Des Weiteren wird dem Fahrer so die richtige Dosierung der Hinterradbremse abgenommen, da er diese nur noch stark betätigen muss während die Steuereinheit, insbesondere die Bremsensteuerung und das ABS, das tatsächlich notwendige Bremsenteilmoment, insbesondere den tatsächlich notwendigen Soll-Bremsdruck, einstellt.

Weiterhin kann vorgesehen sein, dass das Motorteilmoment, insbesondere das Soll-Drehmoment, durch den Schlupf am Hinterrad bestimmt wird. Die Motorsteuerung, insbesondere eine Motorschleppmomentregelung, ermittelt den Schlupf am Hinterrad und stellt diesen durch Anheben des Motordrehmoments auf einen Sollwert ein. Der Sollwert ergibt sich hierbei einerseits aus dem inertialen Zustand, insbesondere aus der Schräglage und/oder dem Schwimmwinkel, und andererseits aus der Verzögerung und/oder der Fahrzeuggeschwindigkeit des Kraftfahrzeugs.

Optional können verschiedene Einstellungen, beispielsweise Radeigenschaften wie der Reifentyp, und/oder Fahrmodi, beispielsweise Sportmodus mit besonders stark ausgeprägtem Slideverhalten, die Einfluss auf das Verzögerungsverhalten des Kraftfahrzeugs haben, zur Ermittlung des Gesamtmoments oder der Teilmomente herangezogen werden.

Ferner wird die Aufgabe erfindungsgemäß durch ein einspuriges Kraftfahrzeug, insbesondere ein Motorrad, gelöst, das ein Vorderrad und ein Hinterrad, eine Bremsanlage mit einer Vorderradbremse und einer Hinterradbremse, einen Motor, zumindest eine Sensorik und eine mit der Bremsanlage, dem Motor und der Sensorik gekoppelte Steuereinheit aufweist, die dazu ausgebildet ist, das zuvor beschriebene Verfahren durchzuführen. Ein derartiges einspuriges Kraftfahrzeug weist eine kombinierte Steuerung des Hinterraddrehmoments bei der Verzögerung des Kraftfahrzeugs auf, bei der durch eine Kombination von bremsinduziertem Bremsenteilmoment am Hinterrad und motorinduziertem Motorteilmoment am Hinterrad ein Gesamtmoment am Hinterrad erzeugt wird. Dieses Gesamtmoment ist so gewählt, dass das Hinterrad kontrolliert überbremst wird und dadurch ein kontrollierter, stabiler Slide des Hinterrads eingeleitet wird, durch den ein besseres Einlenk- und Bremsverhalten des Kraftfahrzeugs erreicht wird.

Das Kraftfahrzeug kann zusätzlich eine Bremsensteuerung, insbesondere mit ABS, und eine Motorsteuerung, insbesondere eine Motorschleppmomentregelung, aufweisen, die ein Teil der Steuereinheit sein können.

Beispielsweise umfasst die Sensorik eine Bremsdrucksensorik, eine Lenkwinkelsensorik, eine inertiale Messsensorik, insbesondere zumindest einen Beschleunigungssensor und/oder zumindest einen Drehratensensor, und/oder eine Raddrehzahlsensorik. Dadurch können umfassende Informationen zum Zustand des Kraftfahrzeugs erfasst werden, die zur Ermittlung des Gesamtmoments oder der Teilmomente notwendig sind.

Die beschriebenen Vorteile und Merkmale des erfindungsgemäßen Verfahrens gelten gleichermaßen für das einspurige Kraftfahrzeug und umgekehrt.

Weitere Vorteile und Merkmale der Erfindung ergeben sich aus der nachfolgenden Beschreibung sowie aus den beigefügten Zeichnungen, auf die Bezug genommen wird. In den Zeichnungen zeigen:
- Figur 1 eine schematische Seitenansicht eines erfindungsgemäßen einspurigen Kraftfahrzeugs,
- Figur 2 ein Wirkdiagramm verschiedener Bauteile und Einheiten des erfindungsgemäßen einspurigen Kraftfahrzeugs gemäß Figur 1, und
- Figur 3ein Flussdiagramm eines erfindungsgemäßen Verfahrens zur Verzögerung des erfindungsgemäßen einspurigen Kraftfahrzeugs gemäß Figur 1.

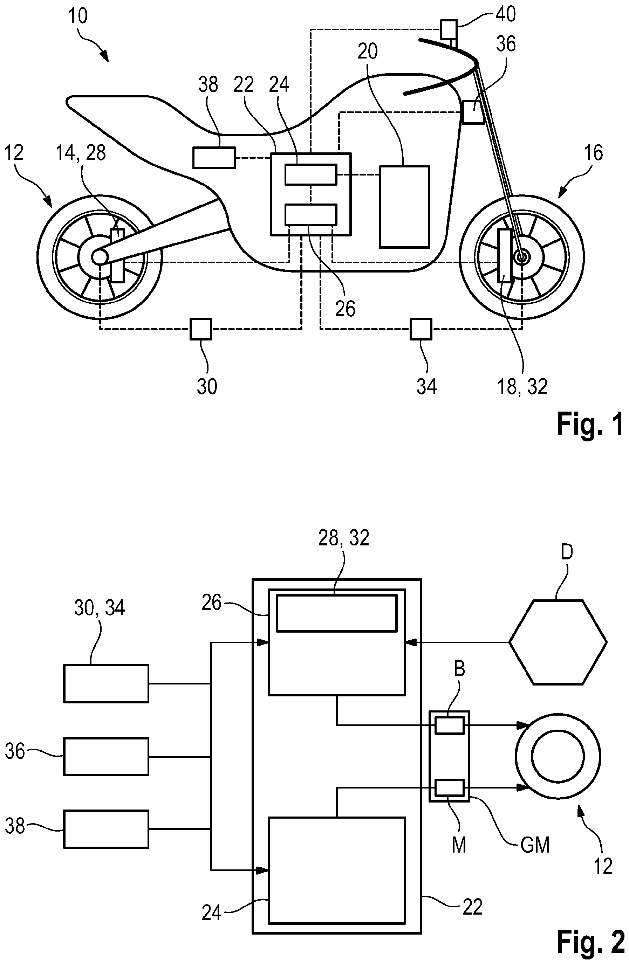

In Figur 1 ist ein erfindungsgemäßes einspuriges Kraftfahrzeug 10 mit einem Hinterrad 12 und einer Hinterradbremse 14 sowie einem Vorderrad 16 und einer Vorderradbremse 18, einem Motor 20 und einer Steuereinheit 22 dargestellt.

Die Steuereinheit 22 umfasst eine mit dem Motor 20 gekoppelte Motorsteuerung 24 und eine mit der Hinterradbremse 14 und der Vorderradbremse 18 gekoppelte Bremsensteuerung 26.

Die Motorsteuerung 24 steuert demnach den Motor 20 und die Bremsensteuerung 26 steuert demnach die Hinterradbremse 14 und die Vorderradbremse 18.

Die Hinterradbremse 14 und die Vorderradbremse 18 stellen zusammen eine Bremsanlage des Kraftfahrzeugs 10 dar, die ein Antiblockiersystem (ABS) umfassen kann. Die Bremsensteuerung 26 kann auch die Steuerung des ABS sein.

Die Motorsteuerung 24 und die Bremsensteuerung 26 können ein Teil der Steuereinheit 22 sein oder jeweils eine eigene, separate Steuerung ausbilden.

In der hier gezeigten Ausführungsform sind die Motorsteuerung 24 und die Bremsensteuerung 26 Teil der Steuereinheit 22 und stehen in Datenverbindung miteinander.

Des Weiteren weist das Kraftfahrzeug 10 eine Vielzahl an Sensoriken auf, die mit der Steuereinheit 22 gekoppelt sind.

Am Hinterrad 12 hat das Kraftfahrzeug 10 zum einen eine Hinterrad-Bremsdrucksensorik 28 und zum anderen eine Hinterrad-Raddrehzahlsensorik 30.

Am Vorderrad 16 hat das Kraftfahrzeug 10 zum einen eine Vorderrad-Bremsdrucksensorik 32 und zum anderen eine Vorderrad-Raddrehzahlsensorik 34.

Zudem weist das Kraftfahrzeug 10 eine Lenkwinkelsensorik 36 und eine inertiale Messsensorik 38 auf.

Die inertiale Messsensorik 38 kann beispielsweise drei Beschleunigungssensoren und drei Drehratensensoren umfassen, durch die unter anderem eine Schräglage sowie ein Schwimmwinkel des Kraftfahrzeugs 10 erfasst werden können.

Optional kann das Kraftfahrzeug 10 eine oder mehrere Benutzerschnittstelle(n) aufweisen, beispielsweise in Form eines Eingabegeräts 40 oder mehrerer Eingabegeräte 40, die mit der Steuereinheit 22 in Datenverbindung steht bzw. stehen.

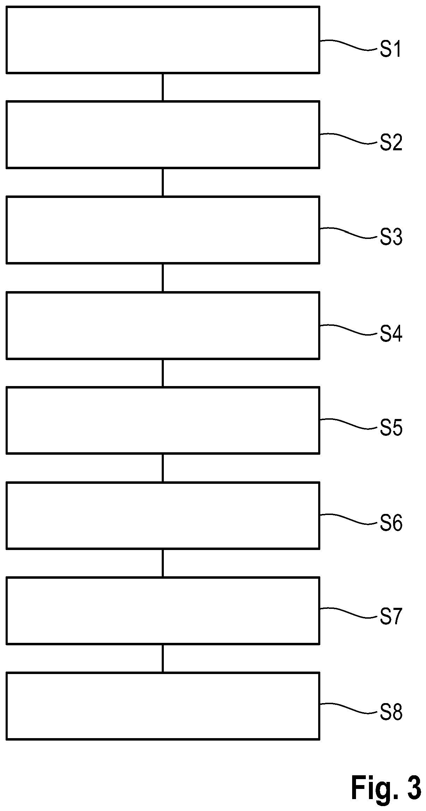

Mittels der Figuren 2 und 3 wird im Folgenden ein Verfahren zum Verzögern des einspurigen Kraftfahrzeugs 10 erläutert. Ziel des Verfahrens ist es, ein durch einen Fahrer des Kraftfahrzeugs 10 eingeleitetes Fahrmanöver zu unterstützen und dabei zu vereinfachen.

Anhand Figur 2 wird das Grundprinzip des Verfahrens beschrieben.

Das gewünschte Fahrmanöver ist ein kontrolliertes, beabsichtigtes Überbremsen des Hinterrads 12, wodurch ein kontrollierter, stabiler "Slide" des Hinterrads 12 erzeugt werden soll, um dadurch eine stärkere Verzögerung des Kraftfahrzeugs zu erreichen als sie bei einem normalen Anbremsvorgang möglich wäre.

Dazu erfasst die Bremsensteuerung 26 oder genauer die Bremsdrucksensorik 28, 32 der Steuereinheit 22 einen vom Fahrer durch Betätigung der Hinterradbremse 14 und/oder der Vorderradbremse 18 erzeugten Bremsdruck D, der zu einer Verzögerung des Kraftfahrzeugs 10 führt.

Der Bremsdruck D an der Hinterradbremse 14 und der Bremsdruck D an der Vorderradbremse 18 können hierbei unterschiedlich sein.

Dabei kann die Steuereinheit 22 aufgrund verschiedener Fahrzeugparameter automatisch erkennen, dass das gewünschte Fahrmanöver durchgeführt werden soll.

Alternativ kann der Steuereinheit 12 zeitlich vor oder während dem gewünschten Fahrmanöver durch eine manuelle Eingabe an einer der Eingabegeräte 40 mitgeteilt werden, dass das gewünschte Fahrmanöver beim nächsten Verzögern des Kraftfahrzeugs 10 bzw. jetzt durchgeführt werden soll.

Anschließend bestimmt die Steuereinheit 22 sowohl anhand des erfassten Bremsdrucks D an der Hinterradbremse 14 und/oder der Vorderradbremse 18 als auch weiterer Daten der Raddrehzahlsensorik 30, 34, der Lenkwinkelsensorik 36 und der in der inertialen Messsensorik 38 ein Gesamtmoment GM, das am Hinterrad 12 notwendig ist, um das gewünschte Überbremsen und demnach den Slide des Hinterrads 12 einzuleiten.

Die Grundidee des Verfahren ist es, einen Teil des notwendigen Gesamtmoments GM durch die Motorsteuerung 24 und einen anderen Teil des notwendigen Gesamtmoments GM durch die Bremsensteuerung 26 zu erzeugen.

Das durch die Motorsteuerung 24 erzeugte Motorteilmoment M und das durch die Bremsensteuerung 26 erzeugte Bremsenteilmoment B ergeben zusammen das notwendige Gesamtmoment GM am Hinterrad 12.

Die einzelnen Schritte des Verfahrens werden im Folgenden anhand der Figur 3 genauer beschrieben.

In einem Schritt S1 betätigt der Fahrer des Kraftfahrzeugs 10 die Hinterradbremse 14 und/oder die Vorderradbremse 18, um eine Verzögerung des Kraftfahrzeugs 10 zu erreichen. Durch Betätigen der Hinterradbremse 14 und/oder der Vorderradbremse 18 erzeugt der Fahrer den Bremsdruck D an der Hinterradbremse 14 bzw. an der Vorderradbremse 18.

In einem Schritt S2 erkennt die Steuereinheit 12, dass der Fahrer das gewünschte Fahrmanöver ausführen will.

Die Erkennung kann einerseits automatisch erfolgen oder andererseits manuell induziert werden.

Die automatische Erkennung erfolgt anhand von verschiedenen Fahrzeugparametern, wie beispielsweise des aktuellen Bremsdrucks D an der Hinterradbremse 14 und/oder der Vorderradbremse 18, eines aktuellen inertialen Zustands des Kraftfahrzeugs 10, insbesondere der aktuellen Schräglage und des aktuellen Schwimmwinkels, der aktuellen Verzögerung und einer aktuellen Geschwindigkeit des Kraftfahrzeugs 10.

Bei der manuellen Indizierung wird der Steuereinheit 12 zeitlich vor oder während dem gewünschten Fahrmanöver durch manuelles Betätigen eines Auslösers durch den Fahrer mitgeteilt, dass das gewünschte Fahrmanöver beim nächsten Verzögern des Kraftfahrzeugs 10 bzw. jetzt - wenn das Kraftfahrzeug 10 gerade verzögert wird - durchgeführt werden soll.

Der Auslöser kann beispielsweise eine durch den Fahrer manuelle Eingabe an einer der Eingabegeräte 40 sein.

Zusätzlich oder alternativ kann ein kurzes manuelles Betätigen der Hinterradbremse 14 durch den Fahrer als Auslöser dienen.

In einem Schritt S3 wird durch die Steuereinheit 22 anhand aktueller Messdaten der Bremsdrucksensorik 28, 32, der Raddrehzahlsensorik 30, 34, der Lenkwinkelsensorik 36 und der inertialen Messsensorik 38 das Gesamtmoment GM bestimmt, das zum Einleiten des Slides des Hinterrads 12 notwendig ist.

Auf Grundlage des bestimmten Gesamtmoments GM ermittelt die Bremsensteuerung 26 in einem Schritt S4 unter Einbezug der Verzögerung des Kraftfahrzeugs 10 einen Soll-Bremsdruck D_{Soll}, mit dem die Hinterradbremse 14 betätigt werden soll, um das Bremsenteilmoment B am Hinterrad 12 zu erzeugen, das grob, d. h. in etwa, dem bestimmten Gesamtmoment GM entsprechen soll.

Die Verzögerung wird einerseits mittels der inertialen Messsensorik 38 und andererseits aus dem aktuellen Bremsdruck B der Vorderradbremse 18 ermittelt.

Durch Betätigen der Hinterradbremse 14 durch die Bremsensteuerung 26 oder das durch die Bremsensteuerung 26 gesteuerte ABS mit dem ermittelten Soll-Bremsdruck D_{Soll} wird in einem Schritt S5 das Bremsenteilmoment B am Hinterrad 12 erzeugt.

Es ist demnach möglich, dass die Steuereinheit 12 bzw. die Bremsensteuerung 26 vollautomatisch das Bremsenteilmoment B am Hinterrad 12 erzeugt, ohne dass der Fahrer des Kraftfahrzeugs 10 die Hinterradbremse 14 selbst betätigen muss.

Im Falle einer Betätigung der Hinterradbremse 14 durch den Fahrer kann die Bremsensteuerung 26 eine Bremsdruckbegrenzung der Hinterradbremse 14 darstellen, durch die der vom Fahrer aufgebrachte Bremsdruck D auf den Soll-Bremsdruck D_{Soll} eingestellt, insbesondere verringert wird. Diese Teilfunktion nimmt dem Fahrer die richtige Dosierung der Hinterradbremse 14 ab, da er diese nur noch stark betätigen muss, während die Bremsensteuerung 26 den tatsächlich notwendigen Soll-Bremsdruck D_{Soll} einstellt.

Auf Grundlage des bestimmten Gesamtmoments GM und optional auf Grundlage des durch die Bremsensteuerung 26 erzeugten aktuellen Bremsenteilmoments B am Hinterrad 12 ermittelt die Motorsteuerung 24 in einem Schritt S6 unter Einbezug eines aktuellen Schlupfs des Hinterrads 12, eines aktuellen inertialen Zustands des Kraftfahrzeugs 10, insbesondere der aktuellen Schräglage und des aktuellen Schwimmwinkels, der aktuellen Verzögerung und einer aktuellen Geschwindigkeit des Kraftfahrzeugs 10 einen Sollwert für den Schlupf des Hinterrads 12.

Der Schlupf ergibt sich aus einer Abweichung einer Umfangsgeschwindigkeit des Hinterrads 12 von einer Umfangsgeschwindigkeit des Vorderrads 16. Der Schlupf wird somit aus den erfassten Daten der Raddrehzahlsensorik 30, 34 bestimmt.

Die Schlupfregelung erfolgt über das Regeln eines Motordrehmoments, über das wiederrum das Motorteilmoment M am Hinterrad 12 erzeugt wird.

Dazu wird in einem Schritt S7 ein Soll-Drehmoment des Motors 20 durch die Motorsteuerung 24 ermittelt, das die Raddrehzahl des Hinterrads 12 derart einstellt, dass der Soll-Schlupf am Hinterrad 12 erreicht wird, oder anders ausgedrückt, das das durch die Bremsensteuerung 26 erzeugte aktuelle Bremsenteilmoment B am Hinterrad 12 durch Erzeugen des zusätzlichen Motorteilmoment M auf das bestimmte Gesamtmoment GM einstellt.

In einem Schritt S8 wird das aktuelle Drehmoment des Motors 20 auf das ermittelte Soll-Drehmoment geregelt, wodurch das Motorteilmoment M zusätzlich zum durch die Bremsensteuerung 26 erzeugten Bremsenteilmoment B am Hinterrad 12 erzeugt und somit der ermittelte Soll-Schlupf und folglich das bestimmte, notwendige Gesamtmoment GM erreicht wird.

Das Regeln des Drehmoments des Motors 20 kann beispielsweise durch das Ansteuern des gesamten Motors 20, einzelner Zylinderbänke und/oder einzelner Zylinder in an sich bekannter Weise erfolgen.

Demnach nimmt die Motorsteuerung 24 eine Art Feinjustierung des durch die Bremsensteuerung 26 "grob" erzeugten Bremsenteilmoments B am Hinterrad 12 vor, um das aktuelle Hinterraddrehmoment (=̂ Bremsenteilmoment B) auf das bestimmte Gesamtmoment GM einzustellen, insbesondere zu vergrößern.

In Summe ergeben das Bremsenteilmoment B und das Motorteilmoment M somit das Gesamtmoment GM.

Zusammenfassend wird durch die Bremsensteuerung 26 das aktuelle Drehmoment am Hinterrad 12 grob auf das notwendige Gesamtmoment GM eingestellt und durch die Motorsteuerung 24 das von der Bremsensteuerung 26 erzeugt aktuelle Drehmoment am Hinterrad 12 durch Regeln des Motordrehmoments auf das notwendige Gesamtmoment GM feinjustiert.

Optional können über die Benutzerschnittstelle bzw. das Eingabegerät 40 verschiedene Einstellungen, beispielsweise Radeigenschaften wie der Reifentyp, und/oder Fahrmodi, beispielsweise Sportmodus mit besonders stark ausgeprägtem Slideverhalten, vorgenommen werden. Diese Einstellungen haben Einfluss auf das Verzögerungsverhalten des Kraftfahrzeugs 10 und somit auch auf die Ermittlung des Gesamtmoments GM oder der Teilmomente B, M.

## Patentansprüche

1. Verfahren zum Verzögern eines einspurigen Kraftfahrzeugs (10), mit den folgenden Schritten:
a) Bestimmen eines für ein kontrolliertes Überbremsen eines Hinterrads (12) beim Anbremsen einer Kurve benötigten Gesamtmoments (GM) des Hinterrads (12) des Kraftfahrzeugs (10) durch eine Steuereinheit (22) des Kraftfahrzeugs (10),
b) Ermitteln eines Bremsenteilmoments (B) und eines Motorteilmoments (M) durch die Steuereinheit (22) in Abhängigkeit des benötigten Gesamtmoments (GM), und
c) Erzeugen des Bremsenteilmoments (B) am Hinterrad (12) durch Ansteuern einer Bremsanlage des Kraftfahrzeugs (10) durch die Steuereinheit (22) und Erzeugen des Motorteilmoments (M) am Hinterrad (12) durch Ansteuern eines Motors (20) des Kraftfahrzeugs (10) durch die Steuereinheit (22).

2. Verfahren nach Anspruch 1, **dadurch gekennzeichnet, dass** das Bremsenteilmoment (B) und das Motorteilmoment (M) in Summe das benötigte Gesamtmoment (GM) ergeben.

3. Verfahren nach Anspruch 1 oder 2, **dadurch gekennzeichnet, dass** die Bremsanlage eine Bremsensteuerung (26) aufweist, die einen Teil der Steuereinheit (22) darstellt, insbesondere wobei die Bremsanlage ein Antiblockiersystem umfasst, und/oder dass das Kraftfahrzeug (10) eine Motorsteuerung (24) aufweist, die einen Teil der Steuereinheit (22) darstellt.

4. Verfahren nach einem der vorhergehenden Ansprüche, **dadurch gekennzeichnet, dass** zum Erzeugen des Bremsenteilmoments (B) am Hinterrad (12) die folgenden weiteren Schritte durchgeführt werden:
- Ermitteln eines Soll-Bremsdrucks (D_{Soll}) der Bremsanlage in Abhängigkeit des ermittelten Bremsenteilmoments (B) durch die Steuereinheit (22), insbesondere die Bremsensteuerung (26), und
- Erzeugen des Bremsenteilmoments (B) durch Betätigen der Bremse (14, 18) der Bremsanlage durch die Steuereinheit (22) mit dem ermittelten Soll-Bremsdruck (D_{Soll}).

5. Verfahren nach Anspruch 4, **dadurch gekennzeichnet, dass** ein vom Fahrer aufgebrachter Bremsdruck (D) durch Ansteuerung der Bremsanlage durch die Steuereinheit (22), insbesondere die Bremsensteuerung (26), auf den Soll-Bremsdruck (D_{Soll}) reduziert wird.

6. Verfahren nach einem der vorhergehenden Ansprüche, **dadurch gekennzeichnet, dass** zum Erzeugen des Motorteilmoments (M) die folgenden weiteren Schritte durchgeführt werden:
- Ermitteln eines Soll-Drehmoments des Motors (20) auf Grundlage des ermittelten Motorteilmoments (M), und
- Erzeugen des Motorteilmoments (M) durch Regeln des Motors (20) auf das Soll-Drehmoment durch die Steuereinheit (22), insbesondere die Motorsteuerung (24).

7. Verfahren nach Anspruch 6, **dadurch gekennzeichnet, dass** das Regeln des Motors (20) auf das ermittelte Soll-Drehmoment durch Ansteuern des gesamten Motors (20), einzelner Zylinder und/oder einzelner Zylinderbänke des Motors (20) erfolgt.

8. Verfahren nach einem der vorhergehenden Ansprüche, **dadurch gekennzeichnet, dass** das Gesamtmoment (GM), das Bremsenteilmoment (B), insbesondere der Soll-Bremsdruck (D_{Soll}), und/oder das Motorteilmoment (M), insbesondere das Soll-Drehmoment, auf Grundlage eines aktuellen Lenkwinkels, einer aktuellen Raddrehzahl eines Vorderrads (16), einer aktuellen Raddrehzahl des Hinterrads (12), einer aktuellen Fahrzeuggeschwindigkeit, eines aktuellen Schlupfs des Vorderrads (16), eines aktuellen Schlupfs des Hinterrads (12), eines aktuellen inertialen Zustands, insbesondere einer aktuellen Schräglage und/oder eines aktuellen Schwimmwinkels des Kraftfahrzeugs (10), eines gewählten Fahrmodus und/oder eines vom Fahrer aufgebrachten Bremsdrucks (D), insbesondere am Vorderrad (16), ermittelt wird.

9. Einspuriges Kraftfahrzeug (10) mit einem Vorderrad (16) und einem Hinterrad (12), einer Bremsanlage mit einer Vorderradbremse (18) und einer Hinterradbremse (14), einem Motor (20), zumindest einer Sensorik (28, 30, 32, 34, 36, 38) und einer mit der Bremsanlage, dem Motor (20) und der Sensorik (28, 30, 32, 34, 36, 38) gekoppelten Steuereinheit (22), die dazu ausgebildet ist, das Verfahren nach einem der vorhergehenden Ansprüche durchzuführen.

10. Einspuriges Kraftfahrzeug (10) nach Anspruch 9, **dadurch gekennzeichnet, dass** die Sensorik eine Bremsdrucksensorik (28, 32), eine Lenkwinkelsensorik (36), eine inertiale Messsensorik (38), insbesondere zumindest einen Beschleunigungssensor und/oder zumindest einen Drehratensensor, und/oder eine Raddrehzahlsensorik (30, 34) umfasst.

## Claims

1. Method for decelerating a single-track motor vehicle (10), having the following steps:
a) determining a total torque (GM) of a rear wheel (12) of the motor vehicle (10) required for controlled overbraking of the rear wheel (12) during the initial braking for a curve by way of a control unit (22) of the motor vehicle (10),
b) ascertaining a braking partial torque (B) and an engine partial torque (M) by way of the control unit (22) as a function of the required total torque (GM), and
c) generating the braking partial torque (B) at the rear wheel (12) by activating a braking system of the motor vehicle (10) by way of the control unit (22) and generating the engine partial torque (M) at the rear wheel (12) by activating an engine (20) of the motor vehicle (10) by way of the control unit (22).

2. Method according to Claim 1, **characterized in that** the braking partial torque (B) and the engine partial torque (M) in sum result in the required total torque (GM) .

3. Method according to Claim 1 or 2, **characterized in that** the braking system has a brake controller (26), which represents a part of the control unit (22), in particular wherein the braking system comprises an antilock braking system, and/or **in that** the motor vehicle (10) has an engine controller (24), which represents a part of the control unit (22).

4. Method according to any one of the preceding claims, **characterized in that** the following further steps are carried out to generate the braking partial torque (B) at the rear wheel (12):
- ascertaining a setpoint brake pressure (D_{Soll}) of the braking system as a function of the ascertained braking partial torque (B) by way of the control unit (22), in particular the brake controller (26), and
- generating the braking partial torque (B) by actuating the brake (14, 18) of the braking system by way of the control unit (22) using the ascertained setpoint brake pressure (D_{Soll}) .

5. Method according to Claim 4, **characterized in that** a brake pressure (D) applied by the driver is reduced to the setpoint brake pressure (D_{Soll}) by activating the braking system by way of the control unit (22), in particular the brake controller (26).

6. Method according to any one of the preceding claims, **characterized in that** the following further steps are carried out to generate the engine partial torque (M):
- ascertaining a setpoint torque of the engine (20) on the basis of the ascertained engine partial torque (M), and
- generating the engine partial torque (M) by regulating the engine (20) to the setpoint torque by way of the control unit (22), in particular the engine controller (24).

7. Method according to Claim 6, **characterized in that** the regulation of the engine (20) to the ascertained setpoint torque is carried out by activating the entire engine (20), individual cylinders, and/or individual cylinder banks of the engine (20).

8. Method according to any one of the preceding claims, **characterized in that** the total torque (GM), the braking partial torque (B), in particular the setpoint brake pressure (D_{Soll}) , and/or the engine partial torque (M), in particular the setpoint torque, is ascertained on the basis of a current steering angle, a current wheel speed of a front wheel (16), a current wheel speed of the rear wheel (12), a current vehicle velocity, a current slip of the front wheel (16), a current slip of the rear wheel (12), a current inertial state, in particular a current inclination and/or a current sideslip angle of the motor vehicle (10), a selected driving mode, and/or a brake pressure (D) applied by the driver, in particular at the front wheel (16).

9. Single-track motor vehicle (10) having a front wheel (16) and a rear wheel (12), a braking system having a front wheel brake (18) and a rear wheel brake (14), an engine (20), at least one sensor system (28, 30, 32, 34, 36, 38), and a control unit (22), which is coupled to the braking system, the engine (20), and the sensor system (28, 30, 32, 34, 36, 38) and is designed to carry out the method according to any one of the preceding claims.

10. Single-track motor vehicle (10) according to Claim 9, **characterized in that** the sensor system comprises a brake pressure sensor system (28, 32), a steering angle sensor system (36), an inertial measurement sensor system (38), in particular at least one acceleration sensor and/or at least one rotation rate sensor, and/or a wheel speed sensor system (30, 34).

## Revendications

1. Procédé de décélération d'un véhicule automobile monovoie (10), ledit procédé comprenant les étapes suivantes :
a) déterminer, par le biais d'une unité de commande (22) du véhicule automobile (10), un couple total (GM) de la roue arrière (12) du véhicule automobile (10) qui est nécessaire au sur-freinage contrôlé d'une roue arrière (12) lors d'un freinage dans un virage,
b) déterminer, par le biais de l'unité de commande (22), un couple de freinage partiel (B) et un couple moteur partiel (M) en fonction du couple total (GM) requis, et
c) générer le couple de freinage partiel (B) sur la roue arrière (12) par commande d'un système de freinage du véhicule automobile (10) par le biais de l'unité de commande (22) et générer le couple moteur partiel (M) sur la roue arrière (12) par commande d'un moteur (20) du véhicule automobile (10) par le biais de l'unité de commande (22).

2. Procédé selon la revendication 1, **caractérisé en ce que** l'addition du couple de freinage partiel (B) et du couple moteur partiel (M) donne le couple total (GM) requis.

3. Procédé selon la revendication 1 ou 2, **caractérisé en ce que** le système de freinage comporte une commande de freinage (26) qui représente une partie de l'unité de commande (22), notamment le système de freinage comprenant un système de freinage antiblocage, et/ou **en ce que** le véhicule automobile (10) comporte une commande de moteur (24) qui représente une partie de l'unité de commande (22).

4. Procédé selon l'une des revendications précédentes, **caractérisé en ce que** les étapes supplémentaires suivantes sont réalisées pour générer le couple de freinage partiel (B) sur la roue arrière (12) :
- déterminer une pression de freinage cible (D_{Soll}) du système de freinage en fonction du couple de freinage partiel (B) déterminé par l'unité de commande (22), en particulier la commande de freinage (26), et
- générer le couple de freinage partiel (B) par actionnement du frein (14, 18) du système de freinage par l'unité de commande (22) avec la pression de freinage cible (D_{Soll}) déterminée.

5. Procédé selon la revendication 4, **caractérisé en ce qu'**une pression de freinage (D) appliquée par le conducteur est réduite à la pression de freinage cible (D_{Soll}) par commande du système de freinage par le biais de l'unité de commande (22), en particulier de la commande de freinage (26).

6. Procédé selon l'une des revendications précédentes, **caractérisé en ce que** les étapes supplémentaires suivantes sont réalisées pour générer le couple moteur partiel (M) :
- déterminer un couple cible du moteur (20) sur la base du couple moteur partiel déterminé (M), et
- générer le couple moteur partiel (M) par réglage du moteur (20) sur le couple cible par le biais de l'unité de commande (22), en particulier de la commande de moteur (24).

7. Procédé selon la revendication 6, **caractérisé en ce que** le réglage du moteur (20) sur le couple cible déterminé est effectué par commande de tout le moteur (20), les cylindres individuels et/ou les rangées de cylindres individuelles du moteur (20).

8. Procédé selon l'une des revendications précédentes, **caractérisé en ce que** le couple total (GM), le couple de freinage partiel (B), notamment la pression de freinage cible (D_{Soll}), et/ou le couple moteur partiel (M), en particulier le couple cible sont déterminés sur la base d'un angle de braquage actuel, d'une vitesse de rotation actuelle d'une roue avant (16), d'une vitesse de rotation actuelle de la roue arrière (12), d'une vitesse de véhicule actuelle, d'un patinage actuel de la roue avant (16), d'un patinage actuel de la roue arrière (12), d'un état inertiel actuel, notamment d'une position inclinée actuelle et/ou d'un angle de patinage actuel du véhicule automobile (10), d'un mode de conduite sélectionné et/ou d'une pression de freinage (D) appliquée par le conducteur, notamment sur la roue avant (16).

9. Véhicule automobile monovoie (10) comprenant une roue avant (16) et une roue arrière (12), un système de freinage pourvu d'un frein de roue avant (18) et d'un frein de roue arrière (14), un moteur (20), au moins un système de capteurs (28, 30, 32, 34, 36, 38) et une unité de commande (22) qui est couplée au système de freinage, au moteur (20) et au système de capteurs (28, 30, 32, 34, 36, 38) et qui est conçue pour mettre en œuvre le procédé selon l'une des revendications précédentes.

10. Véhicule automobile monovoie (10) selon la revendication 9, **caractérisé en ce que** le système de capteurs comprend un système de capteurs de pression de freinage (28, 32), un système de capteurs d'angle de braquage (36), un système de capteurs de mesure inertiel (38), en particulier au moins un capteur d'accélération et/ou au moins un capteur de vitesse de rotation et/ou un système de capteurs de vitesse de rotation de roue (30, 34).
